# EUROPEAN PATENT APPLICATION

(11) **EP 3 199 019 A1**
(43) Date of publication of application: **02.08.2017**
(21) Application number: 16002027.7
(22) Date of filing: 19.09.2016
(51) Int. Cl.: A01G 9/04, B65D 1/36, A01G 1/00, E04D 1/30, E04D 11/00

(54) **SYSTEM FOR VEGETATION ON ROOFS**

(30) Priority: 18.09.2015 NL 1041474
(71) Applicant: ABS Infradvies B.V., 8102 ME Raalte (NL); Vermeer, Adrianus Maria Antonius, 5071 EE Udenhout (NL)
(72) Inventor: Vermeer, Adrianus Maria Antonius, 5071 EE Udenhout (NL)
(74) Representative: Ferguson, Alexander

(57) **Abstract**

System for vegetation on a roof, in particular a flat roof, more in particular a flat roof placed at a slope, comprising one or more first accommodation spaces for holding a growth medium and vegetation placed in or on it, a number of lower trays placed on the roof which trays have a bottom and on which trays the first accommodation spaces are supported, wherein second accommodation spaces have been formed underneath the growth medium and on top of the bottom of the lower trays, which second accommodation spaces are in water transporting connection with the first accommodation spaces, for holding a storage of atmospheric water for the benefit of the growth medium and the vegetation and/or for buffering atmospheric water, characterized in that the lower trays have one or more outlets for letting out the water out of the lower trays, wherein the system further comprises one or more water discharge conduits extending from one or more of the outlets to a location of discharge, wherein the system further comprises one or more closing devices of which the position can be controlled for influencing the quantity of water flowing out of the lower trays to the discharge and means for controlling the position of the closing devices, which control means are operative in dependency on an external parameter

## Description

### BACKGROUND OF THE INVENTION

The invention relates to a system for vegetation on roofs, in particular flat roofs, wherein the vegetation is supported in upper trays underneath which accommodation spaces have been provided, usually lower trays, for collection of surplus atmospheric water. The invention further relates to a method for managing such a roof with vegetation.

Placing vegetation on flat roofs is used more and more. Frequently installed systems comprise a system of trays that may form a water storage, and directly or indirectly supported on said trays, a growth medium or substrate on which the vegetation can grow. In order to prevent that the lower trays become filled with collected surplus atmospheric water that has seeped down from the growth medium, measures have been taken to discharge an excess of water out of the trays.

An example has been given in US 2011/0290341, and US 2014/0151395. The trays have been connected to each other for transporting water from the one tray to the other. The lowermost tray (when considered in slope direction) has been provided with an outlet having a water level-controlled valve, wherein the object is to be able to drain a constant flow rate.

Another example has been given in EP 1.044.599, with trays that have been provided with elevations on which the growth medium is supported and that have been provided with overflow openings. The trays have further been connected one to the other via tubes so that water can flow from the one tray to the other tray to distribute the water over the trays.

### SUMMARY OF THE INVENTION

It is an object of the invention to provide a system of the type mentioned in the preamble, in which the water collected in the water accommodation spaces underneath the growth medium is at least partially utilized for other purposes than discharge.

It is an object of the invention to provide an efficient system of the type mentioned in the preamble, for managing the water collected in the water accommodation spaces underneath the growth medium, in particular for managing the water level.

It is an object of the invention to provide a system of the type mentioned in the preamble, in which the water collected in the water accommodation spaces underneath the growth medium is at least partially utilized for influencing the physical conditions in the building of which the roof is a part.

It is an object of the invention to provide a system of the type mentioned in the preamble, with which the physical conditions in the building of which the roof is a part, can be advantageously influenced in a controlled manner.

According to one aspect, for achieving at least one of these or other objects, the invention provides a system for vegetation on a roof, in particular a flat roof, more in particular a flat roof placed at a slope, comprising one or more first accommodation spaces for holding a growth medium and vegetation placed in or on it, a number of lower trays placed on the roof which trays have a bottom and on which trays the first accommodation spaces are supported, wherein second accommodation spaces have been formed underneath the first accommodation spaces and on top of the bottom of the lower trays, which second accommodation spaces are in water transporting connection with the first accommodation spaces, for holding a storage of atmospheric water for the benefit of the growth medium and the vegetation and/or for buffering atmospheric water, characterized in that the lower trays have one or more outlets for letting out the water out of the lower trays, wherein the system further comprises one or more water discharge conduits extending from one or more of the outlets to a location of discharge, wherein the system further comprises one or more closing devices of which the position can be controlled for influencing the quantity of water flowing out of the lower trays to the discharge and means for controlling the position of the closing devices, which control means are operative in dependency on an external parameter, wherein the external parameter has been selected from the group consisting of temperature, degree of humidity and time.

In that way, conditions different to the conditions occurring within the lower trays, as is done using said level-controlled valves, can be geared to. Depending on the external parameter used and wanted more or less water will be held in the second accommodation spaces.

The external parameter can in particular be the temperature. In that way, the water storage in the second accommodation spaces can be geared to the seasons. The temperature used can be the temperature at a location in or near the closing device (water) or may or may not be situated in the immediate surrounding area of the system. The temperature can be the outside air temperature. The temperature can be the temperature of the collected and/or discharged atmospheric water. The temperature can be the temperature of the growth medium.

For that purpose, the control means may comprise a thermostat, for instance a thermostat including a bimetal, preferably a thermostat that can be set, preferably can be programmed. For instance, a thermostat-controlled tap (closing device controlled by a thermostat). The thermostat may have been configured for functional (sensory) contact with the ambient air, the collected atmospheric water (in trays or in conduits) or the substrate/growth medium. The thermostat may have been configured for functional (sensory) contact with the ambient air or the collected atmospheric water at the location of the closing device. The thermostat may have been configured for functional (sensory) contact remote from the tap, such as in a system having capillary or in a wireless system.

The system may for instance be set such that in the summer relatively much water is buffered in the second accommodation spaces, as a result of which a water layer can be kept having a cooling effect on the rooms below the roof. Furthermore, more water can be made available for evaporation by the vegetation, in which way a cooling effect on the surrounding area of the roof in question can also be realized, as opposed to regular green roofs which indeed have a relatively warm surface. Buffering atmospheric water may also alleviate the load on a sewage system in case of peak rain showers in the summer.

In the winter, it may indeed be opted for to have water discharged at a specific temperature, in particular up to an (average) temperature in which water still flows well, for instance approximately 4 to 5 degrees, in order to thus obtain a water layer that is as thin as possible and as a consequence a stationary air layer that is as thick as possible, so that loss of heat from the rooms below the roof is limited to a large extent.

In one embodiment, a few of the lower trays have been connected to each other via each other's outlets, so that water can flow from the one tray to the other tray, and at least one lower tray has been provided with an outlet connected to the one or more discharge conduits. In another embodiment, each lower tray has been directly connected to the one or more discharge conduits via its own outlet(s). In that way, unwanted differences in water level between the lower trays can be counteracted. The discharge of water from the lower trays can then take place directly from the lower tray in question to the discharge conduit in question.

In one embodiment, the closing devices have been provided at or in the lower trays. In another embodiment, the closing devices have been provided in the discharge conduits.

In a further development of the system according to the invention, wherein the roof is at a slope in a first direction, the lower trays have been provided with one or more of said outlets at their relatively low side. The lower trays may have been placed in series that are consecutive in the first direction, which series extend in a second direction transverse to the first direction. In the second direction, they may be in water connection with each other, so that the water level within the trays of a second series is almost equal in the second direction

In a further development thereof, the discharge conduits comprise first collection conduits extending in the second direction, along the low sides of the lower trays for receiving water from the one or more outlets of said lower trays, preferably between two consecutive series of lower trays extending in the second direction. Slits between the consecutive series of lower trays do not need to be left.

The first collection conduits may have been placed for discharge to a second collection conduit extending in the first direction, for instance to a central atmospheric water discharge.

In a simple embodiment, the closing devices have been placed in the first collection conduits, in particular downstream of the last lower tray in the second direction. In that way, the number of closing devices can remain limited, but nonetheless a water level control per series of lower trays extending in the second direction becomes possible.

For promoting the control of the water levels in the lower trays the closing devices may have been placed upstream of the connection of the first collection conduit to the second collection conduit.

In a simple, alternative embodiment the at least one closing device has been placed downstream of the connection of the highest first collection conduit to the second collection conduit, in particular downstream of the connection of the lowest first collection conduit to the second collection conduit.

In a further development of the system according to the invention, or according to the preamble of claim 1 of the patent application as filed, the first accommodation spaces have been formed by upper trays, and the upper trays have first bottoms and the lower trays have second bottoms, wherein at the location of places that are regularly distributed over their surface the first and the second bottoms are kept spaced apart from each other by a support. In one embodiment, thereof the support has upright walls, which walls have been provided with passage openings for the passage of water in horizontal direction. In a further development thereof, the support has been built up from a structure of upright walls forming vertically continuous cells, in particular honeycomb cells. Such a structure provides bearing power, sufficient for the weight of the upper trays filled with soil and vegetation, as well as large vertical water permeability. The support can also be used for additional support functions, such as supporting tiles adjacent the upper trays. Said support structure may furthermore promote the creation of a stationary air layer, which, as already stated, may be advantageous to the climate in the rooms below the roof. For promoting the flow within the lower trays, the cell walls and the second bottom may leave horizontal fluid flow paths free. In addition thereto, the cell walls may have been provided with passage openings, preferably at their lower edges.

For promoting the storage capacity, the flow and for reinforcing the bottom of the lower trays, the second bottom may have been provided with recesses, wherein the recesses can be part of the said (substantially horizontal) flow paths.

Between the recesses the second bottom may form support surfaces for the support and as a consequence for the parts supported by the support.

In a further development of a system according to the invention, or according to the preamble of claim 1 of the patent application as filed, the first accommodation spaces, like in the said upper trays, are downwardly bound by a (first) bottom provided with passages for water, wherein in between the passages in the first bottom and the lower trays water transporting bodies have been arranged, which extend to inside the passages and extend at least to near the (second) bottom of the lower trays. The water transporting bodies preferably have been made of capillary material, wherein, preferably, the material is mineral wool, in particular rock wool. In that way water is able to move upwards from the second accommodation spaces to the growth medium. The spaces around the water transporting bodies can remain substantially open or free, which may be advantageous to wintery conditions in which an insulating air layer is strived for between the (first) bottom on which the growth medium is supported and the (second) bottom of the second accommodation spaces.

At the location of the passages, the first bottom of the first accommodation spaces may have been provided with break-out ports for forming the passages.

The water transporting bodies may extend down into one or more recesses of the second bottom, preferably down to against its bottom surface. In the said case of support including cells, the water transporting bodies may have been arranged in one or more of the cells, wherein the bodies if required may have been provided with incisions for receiving the cell walls. The horizontal cross-section of the bodies may then be larger than the horizontal cross-section of the cells.

The second accommodation spaces preferably extend over at least almost the entire surface of the lower trays and/or over at least almost the entire roof surface.

In one embodiment including upper trays and lower trays the surface of the upper tray is a fraction of the surface of the lower tray, in particular a fraction with numerator 1, for instance ¼. As regards top view, the upper trays preferably are shaped similar to the lower trays, for instance having a length and a width of half the length and width, respectively, of the lower trays. In one embodiment, the upper trays can be placed over the connections between adjacent lower trays. In that way, the upper trays can be laid such that their transitions are offset relative to the transitions between the lower trays, in a regular manner.

In one embodiment including upper trays and lower trays, wherein the roof has an edge, the lower trays extend closer to the roof edge than the upper trays do, in order to leave a strip (one or more dm wide) or path free, preferably all around, so that a path is provided that can be used during installation, inspection or maintenance of the vegetation roof and/or atmospheric water is also collected outside of the upper trays for collection in the lower trays. The path can then be formed by tiles or another material to create a passageway, such as gravel. Tiles can stably be supported on the said support, which in that case extends sufficiently far beyond the upper trays.

According to a further aspect, the invention provides a method for managing the water storage in a system for vegetation on a roof, in particular a flat roof, more in particular a flat roof placed at a slope, comprising a first or top layer of one or more first accommodation spaces that have been filled with a growth medium and bearing vegetation placed in or on it, wherein one or more water accommodation spaces have been formed underneath the first accommodation spaces and above the roof-covering, which accommodation spaces are in water transporting connection with the first accommodation spaces for holding a storage of atmospheric water for the benefit of the growth medium and the vegetation and/or for buffering atmospheric water, wherein water in the water accommodation spaces is discharged from there via a discharge, wherein the discharge of water from the water accommodation spaces is controlled in dependency on an external parameter. In this case as well, the external parameter can be selected from the group consisting of temperature, degree of humidity and time. The control means can be operative in dependency on the temperature in or near the closing device or at a location in the surrounding area that may or may not be immediate, wherein this temperature has preferably been selected from the group consisting of the air temperature, the temperature of the collected atmospheric water, in particular the water in the lower trays or in the conduits, and the temperature of the growth medium.

In addition, the discharge can be restricted or closed at an (average) temperature of above approximately 5 degrees C, for in the summer realizing a water layer as a buffer for the vegetation and some cooling down of the rooms below the roof. The discharge can be opened at a temperature of below approximately 5 degrees C, in which way in the winter a thin water layer can be realized and use can be made of the insulating effect of an air layer at a slight height above the bottom of the water accommodation spaces. Temperature can be sensed in close proximity of or at the location of the closing device, in the water.

In one embodiment, lower trays have been placed on the roof-covering for forming the water accommodation spaces. Each lower tray may have an individual outlet for the water, which has been connected to a collection conduit for discharge disposed outside of the lower tray.

In a further development, the roof is at a slope in a first direction, wherein the lower trays have been placed in series that are consecutive in the first direction, which series extend in a second direction transverse to the first direction, and wherein water from the lower trays is discharged from the relatively low side of each series of lower trays extending in the second direction.

In a further embodiment, the water of several first collection conduits is collected in a second collection conduit extending in the first direction, which second collection conduit runs to a discharge.

The discharge can be controlled at a location in the first collection conduits.

According to a further aspect, the invention provides a system for vegetation on a roof, in particular a flat roof, in particular a flat roof placed at a slope, comprising a number of upper trays having first bottoms and having (first) accommodation spaces for holding a growth medium and vegetation placed in or on it, a number of lower trays placed on the roof on which lower trays the upper trays are supported, which lower trays form (second) (water) accommodation spaces for holding a storage of atmospheric water drainage for the benefit of the growth medium and the vegetation, wherein the upper trays have a first bottom provided with a number of first openings for downward migration of atmospheric water from the upper tray to the lower tray and with a number of second openings, wherein a water transporting membrane has been laid on the bottom of the upper trays, wherein the lower trays have a second bottom, wherein immediately below the second openings water transporting bodies of capillary material have been arranged that each have a cross-section of a few cm² or more and that extend vertically from the second openings to inside the water accommodation spaces.

The bodies may have a round cross-section, such as circular or elliptic. The bodies may also have a polygonal cross-section, wherein the largest dimensions in two directions that are perpendicular to each other are equal to or differ no more than a few times the smallest of the two dimensions from each other. The concept of bodies does not include a ribbon shape. The bodies have such a cross-section that pollutions and fouling on their circumferential surfaces and inside of them, hardly impedes the vertical passage of water through the bodies.

The second openings can be situated immediately adjacent to or at horizontal intermediate distance from the first openings.

The water transporting bodies have been made of capillary material, wherein, preferably, the material is mineral wool, in particular rock wool.

In a further development, a support supporting the upper trays has been placed between the bottom of the upper trays and the bottom of the lower trays, which support has vertically continuous cells, in particular honeycomb cells, wherein the water transporting bodies of capillary material extend through the support from the second openings to inside the water accommodation spaces. The bodies may have a cross-section exceeding the cross-section of the cells and can be slid onto the cell walls. The cell walls and the second bottom may leave horizontal fluid flow paths free.

The water transporting bodies may have a height exceeding the height of the support.

In one embodiment, the first bottom at the location of the passages has been provided with break-out ports for forming the second openings, so that the upper trays can also be used in an arrangement without lower trays, in that case without ports that have been broken out.

The water transporting bodies preferably make water transporting contact with the membrane.

In case of the support it may extend over at least almost the entire surface of the bottom of the lower tray in question.

The lower tray may have a circumferential wall having an upper edge, wherein the upper edges of the cells of the support are at a level that at the most equals the level of the upper edge of the lower tray circumferential wall.

According to a further aspect, the invention provides an assembly of vegetation trays and pillars, wherein the vegetation trays have a bottom having first elevations or recesses and the pillars with their lower end can be fitted on the top side of the elevations or in the top side of the recesses of the one vegetation tray, and with their upper end can be fitted in the bottom side of the elevations or on the bottom side of the recesses of another vegetation tray situated above it. The pillars may have sidewalls enabling passage of growth medium/substrate for the vegetation.

Embodiments of systems, methods and assemblies according to the invention have been described further in the attached claims of the patent application as filed, the contents of which should be considered inserted herein.

The aspects and measures described in this description and the claims of the application and/or shown in the drawings of this application may where possible also be used individually. Said individual aspects and other aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figures 1A and 1B show a diagonal front view and a top view, respectively, of an example of an upper tray for a system according to the invention;
Figures 1C-E show a number of transport conditions of the upper tray of figures 1A and 1 B;
Figure 2 shows an example of a support for a system according to the invention;
Figure 3 shows an example of a lower tray for a system according to the invention;
Figure 4 shows an assembly of the lower tray of figure 3 including the support of figure 2;
Figure 5 shows the system including the assembly of figure 4 and an upper tray of figure 1C during installation on a flat roof;
Figures 5A and 5B show a side view of the system of figure 5 and a cross-section of the system after installation, respectively;
Figure 6 schematically shows an arrangement of the system of figure 5; and
Figure 7 shows the system of figure 6 on a flat roof of a building.

### DETAILED DESCRIPTION OF THE DRAWINGS

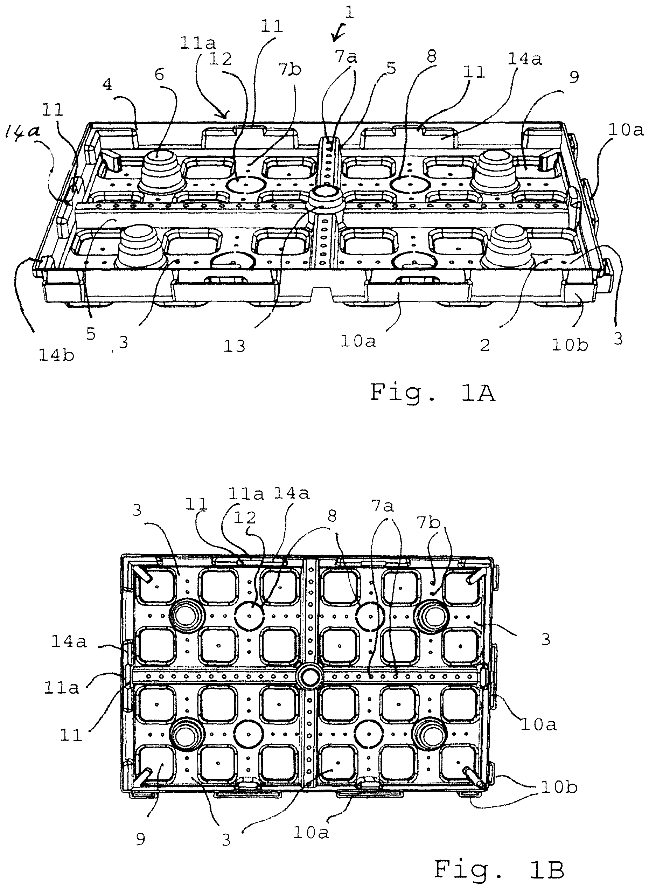

The upper tray 1 in figures 1A and 1B has been made of synthetic material and comprises a bottom 2 and an upright circumferential edge 4. The (first) bottom 2 has four areas 3, between which ribs 5 are located, which form a cross. The ribs 5 have been provided with drainage holes 7a. An elevation 13 has been formed in the centre of the cross. In the bottom 2, each area 3 has been provided with a series of recesses 9, with drainage holes 7b and with elevations 6. In the bottom 2, each area 3 has further been provided with weakenings disposed in a circle surrounding a break-out port 12 for after breaking it out forming a passage 8. The holes 7a,b form first openings and the passages 8 form second openings.

At the inside of the circumferential edge 4 dovetail-shaped receiving spaces 14a,14b opening downwards and to the outside, have been integrally formed. Lips 11 have been integrally formed at the upper side of said receiving spaces 14a,b, which lips are situated at a small distance from the circumferential edge 4 in order to define slots 11a therewith. On the exterior, the circumferential edge 4 has been provided with integrally formed flat dovetail-shaped protrusions 10a,10b that fit inside the receiving spaces 14a,b. As a result, the upper trays can easily be connected to each other, abutting each other.

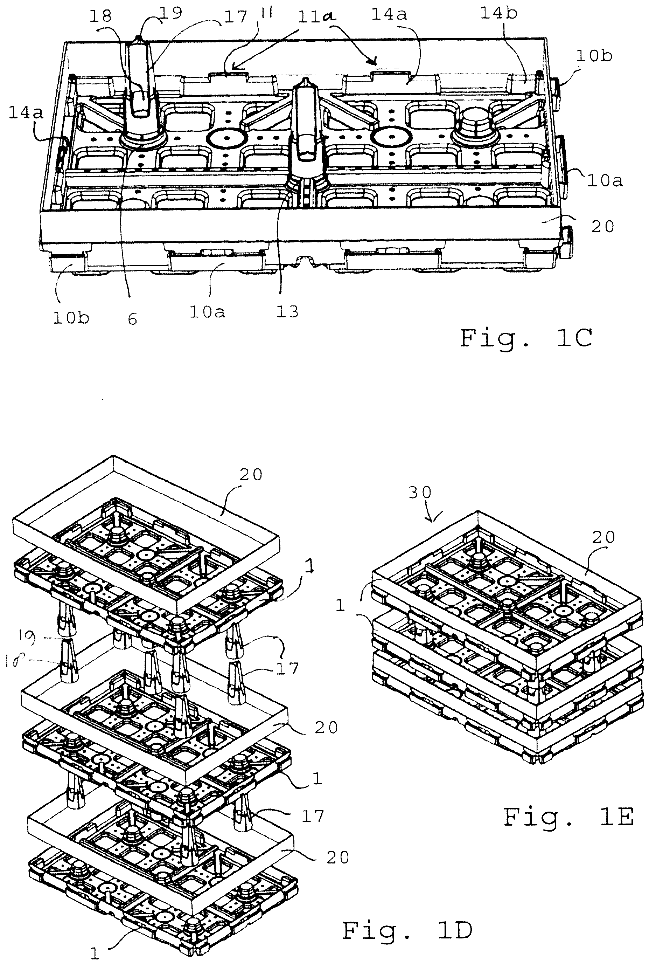

In figure 1C it is shown that the upper tray 1 can be provided with a top piece 20 to increase the fill height of the upper tray. With its walls the top piece 20 fits in the slots 11 a and is then kept in its place. The tray is then ready to be filled with a growth medium, substrate, and then be provided with the wanted vegetation. For transporting several upper trays thus filled, it is advantageous in view of occupation of space, if said upper trays can be transported in stacks. For that purpose, pillars 17 can be used, that can be placed on the elevations 6, 13 in a fitted manner. Said pillars 17 have a support surface 19 at the top, which support surface is able to fittingly engage into the bottom side of an elevation 6, 3 of an upper tray placed above it, see figures 1D and 1E. The pillars 17 have been provided with sideward openings 18, so that when filling the upper tray, they are able to receive the substrate, the advantage of which is that removing the pillars 17 during installation will not result in a shortage of substrate at that location. The height of the pillars 17 is such that there is enough free space for the vegetation. Moreover, the pillars 17 can be stacked, see figure 1D, in order to create a larger intermediate height.

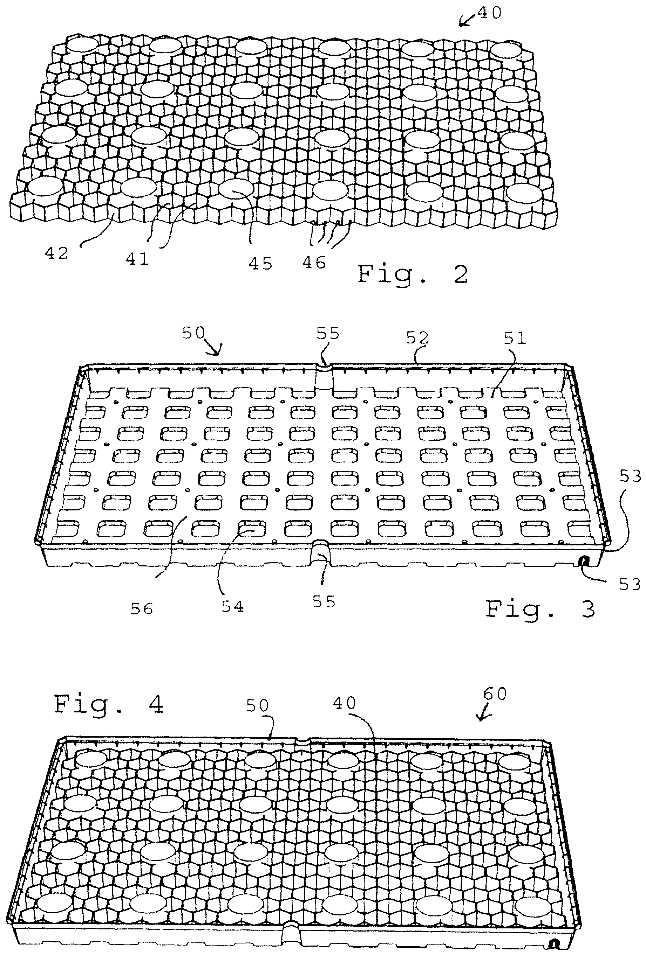

Figure 2 shows a honeycomb core 40, made of synthetic material. The honeycomb core 40 is a support having cells 41 defined by cell walls 42. At the bottom the cell walls 42 have been provided with passages 46 (only a few of which are shown). In a number of cells 41 water transporting bodies 45 having capillary action have been included. The bodies 45 are made of rock wool and cylindrical, having a larger surface than that of a cell 41. At the bottom, they have been provided with incisions so that they can be placed over the cell walls 42. They extend upwards to a little above the top of the cell walls 42 and extend downwards into abutment with the surface of the recess 54 of the lower tray 50 yet to be discussed.

Figure 3 shows a lower tray 50, made of synthetic material. The rectangular tray 50 has a (second) bottom 51 and a circumferential edge 52. The bottom 51 has been provided with a series of recesses 54. In the middle of the long side, the circumferential wall 52 has been provided with a vertical indentation 55. Outlets 53 have been provided near a corner in two sides connecting to each other, which outlets can be opened by breaking out a port, like in flush mount boxes.

In figure 4 the support or honeycomb core 40 has been placed in the tray 50, so as to form the assembly 60. They can be transported to the work site in stacks.

The dimensions of the tray 1 can be 40 cm by 60 cm, that of the tray 50, 80 cm by 120 cm, so that four upper trays 1 occupy a surface area equalling that of one lower tray.

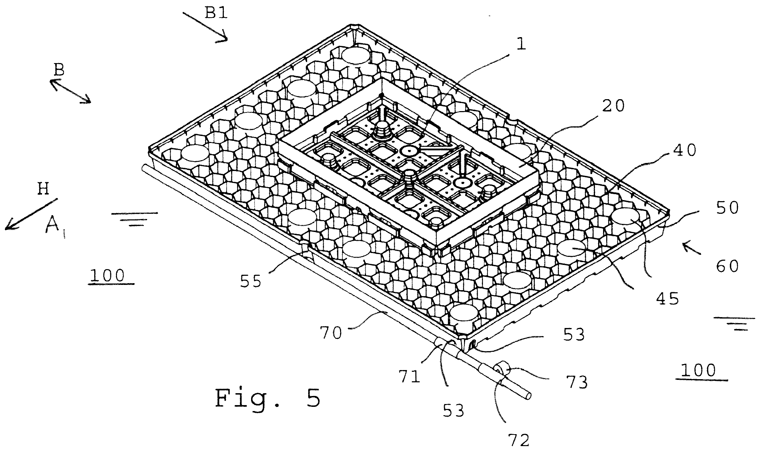

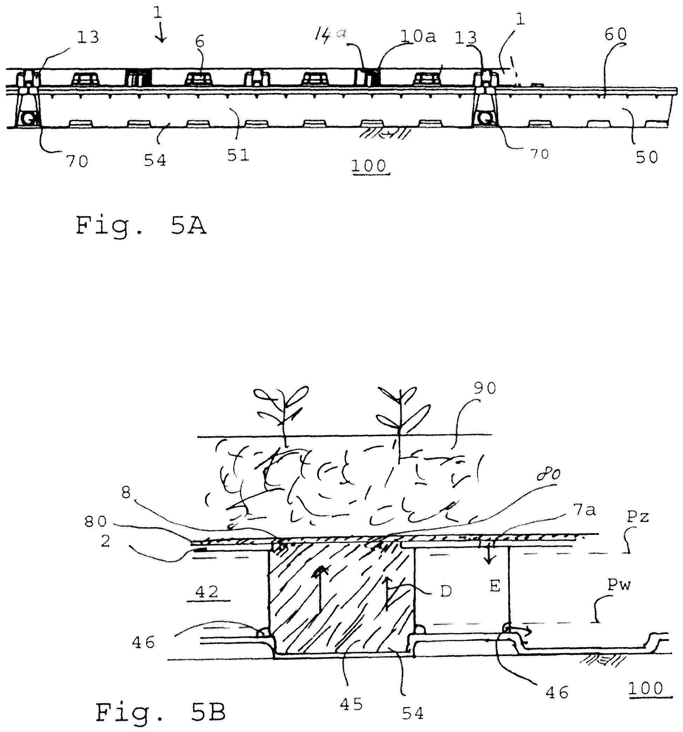

During installation, however, a different approach can be followed, see figure 5. The lower tray 50 has been placed as an assembly 60 on a flat roof 100. In addition to the lower tray assembly 60 shown, further assemblies 60 can be placed, consecutively, in direction H and direction B. An upper tray has been placed in the middle of the assembly 60 shown. The consequence is that when a next upper tray is placed in direction H, A1, its rib 5 may reach over the upper edge of the circumferential edge 51, and said upper edge will then partially extend within the rib 5. This also applies to the upper edge of the circumferential wall 51 of the lower tray 50 adjacent in a direction B. As a result, the bottom 2 of the upper tray 1 can reliably rest on the upper side of the core 40 in the lower tray 50, in particular on the cores 40 of the two adjacent lower tray assemblies 60, as can be seen in figure 5B.

Moreover, the central elevation 13 is then situated above the indentation 55. The indentation 55 can be used for passing electric wiring through to a light source to be accommodated in the elevation 13, or for passing through a water conduit to a sprinkler system to be accommodated in the elevation 13.

If it is desired that the surface of the lower trays 50, starting from the arrangement of figure 5, is to be fully occupied by upper trays, an upper tray can be divided for that purpose by cutting it through in longitudinal direction of and through the ribs 5.

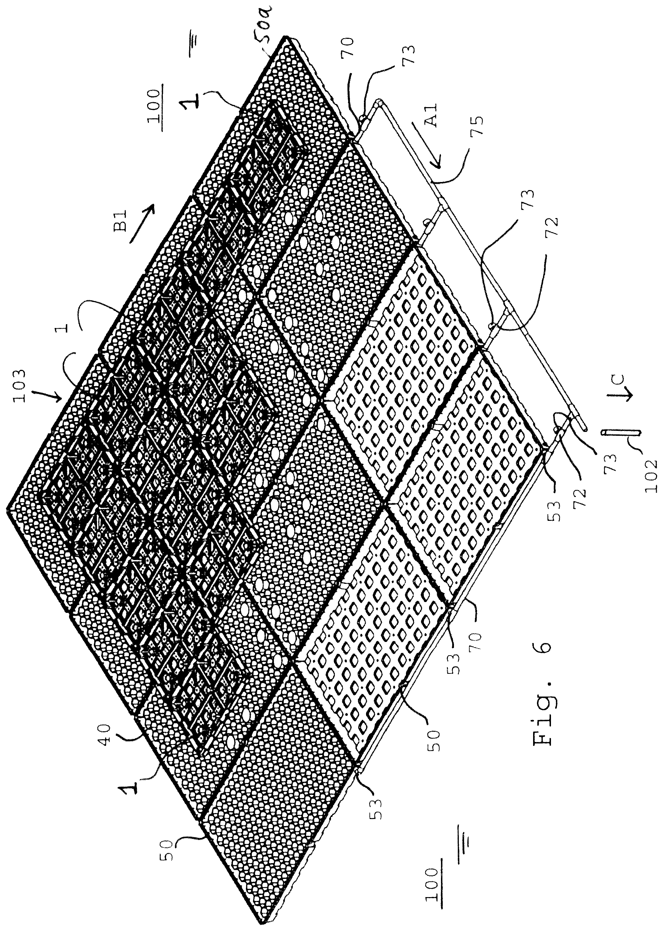

The installation (figure 6) will usually be such that the roof that is at a slope in first direction A1, is first covered by lower tray assemblies 60. They will be laid in series in a second direction B1, starting at the side Z of the flat roof 100. Once the first series has been laid in second direction, a first collection conduit 70 is laid at its relatively low longitudinal edge. By means of connections 71 it is placed in fluid connection with the near outlets 53 of all lower trays 50 in said series, from which the ports were broken out earlier on. The connection to the circumferential wall 52 is always watertight. The tray 50a shown in figure 6 is the last tray in the second direction.

Subsequently, the next series of trays 50/assemblies 60 is laid, alongside the series that has already been laid. The lower trays 50 of the second series may abut the lower trays of the series that has already been laid, wherein room is left for the conduit 70. After placing the second series, a conduit 70 is also connected thereto. This is repeatedly taking place in series, consecutive in first direction A1, direction (transverse) slope of the flat roof. This is illustrated in figure 6, giving an indication of the construction of the system.

Then the upper trays 1 can be supplied, stacked. The upper trays 1 are distributed and placed on the lower trays in the manner as already discussed, wherein adjacent trays 1 can be coupled to each other by engagement of the dovetail-shaped protrusions 10a,b in dovetail-shaped receiving spaces 14a,b. In this case, it is opted for to leave the margins of the system free of upper trays, so that a surrounding passageway 103 is realized, for facilitating maintenance. The upper trays have been depicted without substrate and vegetation, but it will be understood that they will have been included therein.

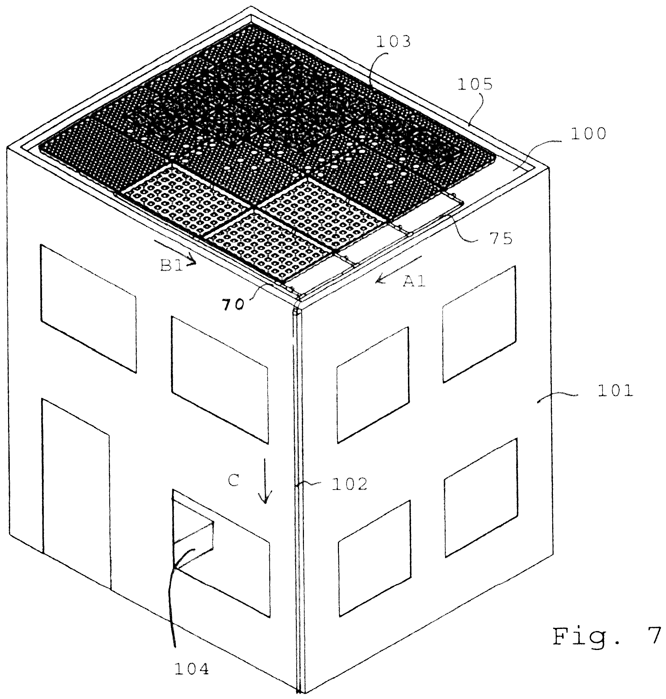

The downstream ends of all conduits 70 are connected with a second collection conduit 75 extending in the first direction A1, which second collection conduit 75 can be connected to a rainwater discharge. In each conduit 70, a closing device 72 has been included between the connection 71 of the lowest tray 50 in the series and the connection to the conduit 75, the closing device having a remote control 73. Said remote controls 73 are controlled from a control unit 104, see figure 7, in which the building 101 has been depicted on the roof of which (surrounded by roof edge 105) the system according to the invention has been placed. The control unit 104 can be programmed to open the closing devices 72, optionally to a wanted extent, or to close them. In that way, the water level in the lower trays 50 can be influenced via each connection 71. Various parameters are eligible for that purpose, of which could be mentioned time, air humidity and, preferably, ambient temperature, in particular air temperature or the temperature of the atmospheric water contained in the system (in the lower trays or in the conduits), or the temperature of the growth medium, as already discussed above.

When the closing devices 72 are closed, the water level in the trays 50 will rise, for instance to level Pz, figure 5B. The tray 50 will then contain a thick layer of water, by way of (emergency) storage or as storage for the vegetation. The cells 41 are largely filled with water. Via the capillary bodies 45, extending from the recessed bottom 54 through a cell 41 and also extending into passages 8 that have been broken out earlier on, water will rise in direction D and via membrane 80 laid on the bottom 2 of the upper tray 1 can be absorbed in substrate 90. The vegetation layer provides coverage of the roof of the building and due to evaporation provides a cooling effect, both for the roof itself and for the surrounding area.

Excess atmospheric water will sink through the substrate 90 and may end up in lower tray 50 via holes 7a,b, direction E.

When there is a surplus of water, in one embodiment, the control unit 104 will open the closing devices 72, so that water is discharged via conduits 71, 75 and rainwater discharge 102, direction C. Flow through each tray per se is promoted by the recesses 54 and the holes 46 in the cell walls. It is also possible to make the cells 41 so spacious that the holes 46 will not be required because each cell 41 will then at least partially be situated above a recess 54.

The control unit 104 can also be programmed to open the closing devices 72 at a certain lower temperature, such as 5 degrees C, in order to achieve a relatively low level Pw. A relatively thick layer of stationary air is then obtained, which has a heat-insulating effect.

Due to the separate flow connection between each tray 50 and the conduits 71, the same situation in terms of water level can be realised for each series of trays (considered in direction B). This may be the same for all series, or differ per series (if the vegetation differs per series, see below).

For further fine-tuned control of the water level in the trays 50 the lowest tray 50 may have been provided with a water level gauge, read by the control unit 104.

The closing devices can be configured like thermostat-controlled taps, which open at a pre-set temperature and close at a specific temperature of the water, such as 5 degrees C. In that case a central control unit will not be required.

In one embodiment, the thermostat-controlled tap has been configured to respond to the temperature of the air in the immediate surrounding area of the tap, such as with a bimetal. In another embodiment, the thermostat-controlled tap has been configured with a remote sensor and capillary, with which the temperature is sensed remote from the closing device, such as the water in the lower tray or in the substrate in the upper tray. The thermostat-controlled tap may also have been configured with a sensor in contact with the water in the closing device.

As the upper trays have been provided with break-out ports, the upper trays are also suitable for vegetation requiring less water, such as sedum, in which case the ports are not broken out. In that way, the lay-out of a roof can be tailor-made, wherein the one upper tray or series of upper trays carries a different vegetation than the other upper tray or series of upper trays, for instance sedum and lavender.

The above description is included to illustrate the operation of preferred embodiments of the invention and not to limit the scope of the invention. Starting from the above explanation many variations that fall within the spirit and scope of the present invention will be evident to an expert.

## Claims

1. System for vegetation on a roof, in particular a flat roof, more in particular a flat roof placed at a slope, comprising one or more first accommodation spaces for holding a growth medium and vegetation placed in or on it, a number of lower trays placed on the roof which trays have a bottom and on which trays the first accommodation spaces are supported, wherein second accommodation spaces have been formed underneath the growth medium and on top of the bottom of the lower trays, which second accommodation spaces are in water transporting connection with the first accommodation spaces, for holding a storage of atmospheric water for the benefit of the growth medium and the vegetation and/or for buffering atmospheric water, **characterized in that** the lower trays have one or more outlets for letting out the water out of the lower trays, wherein the system further comprises one or more water discharge conduits extending from one or more of the outlets to a location of discharge, wherein the system further comprises one or more closing devices of which the position can be controlled for influencing the quantity of water flowing out of the lower trays to the discharge and means for controlling the position of the closing devices, in particular programmable control means, wherein the control means are operative in dependency on an external parameter, wherein the external parameter has been selected from the group consisting of temperature, degree of humidity and time.

2. System according to claim 1, wherein the control means are operative in dependency on temperature, in particular the temperature in or near the closing device or at a location in the surrounding area, wherein the temperature preferably has been selected from the group consisting of the air temperature, the temperature of the collected atmospheric water, in particular the water in the lower trays or in conduits, and the temperature of the growth medium.

3. System according to claim 2, wherein the control means comprise a thermostat, for instance a thermostat including a bimetal, wherein, preferably, the thermostat can be set, wherein, preferably, the closing devices with control means comprise thermostat-controlled taps, which preferably have been placed on the water discharge conduits.

4. System according to claim 3, wherein the thermostat has been provided with a sensor for temperature remote from the closing device.

5. System according to any one of the preceding claims, wherein the roof is at a slope in a first direction and the lower trays, at their relatively low side, have been provided with one or more of said outlets, wherein, preferably, the lower trays have been placed in series that are consecutive in the first direction, which series extend in a second direction transverse to the first direction, wherein, preferably, the discharge conduits comprise first collection conduits extending in the second direction, along the low sides of the lower trays for receiving water from the one or more outlets of the lower trays, preferably between two consecutive series of lower trays extending in the second direction.

6. System according to claim 5, wherein the closing devices have been placed in the first collection conduits, wherein the closing devices have been placed downstream of the outlet of the last lower tray of the series of lower trays connected to the first collection conduit in question.

7. System according to claim 5 or 6, wherein the first collection conduits have been placed for discharge to a second collection conduit, extending in the first direction, wherein, preferably, the at least one closing device has been placed downstream of the connection of the highest first collection conduit to the second collection conduit, in particular downstream of the connection of the lowest first collection conduit to the second collection conduit.

8. System according to claim 7, wherein the second collection conduit connects to an atmospheric water discharge.

9. System according to any one of the preceding claims, wherein the second (water) accommodation spaces extend over at least almost the entire surface of the lower trays and/or extend over at least almost the entire surface of the roof projected on a horizontal plane, wherein, preferably, the roof has an edge and the lower trays extend closer to the roof edge than the upper trays do, in order to leave a path free, preferably all around.

10. Method for managing the water storage in a system for vegetation on a roof, in particular a flat roof, more in particular a flat roof placed at a slope, comprising a first or top layer of one or more first accommodation spaces that have been filled with a growth medium and bearing vegetation placed in or on it, wherein one or more water accommodation spaces have been formed underneath the first accommodation spaces and above the roof-covering, which accommodation spaces are in water transporting connection with the first accommodation spaces for holding a storage of atmospheric water for the benefit of the growth medium and the vegetation and/or for buffering atmospheric water, wherein water in the water accommodation spaces is discharged from there via a discharge, wherein the discharge of water from the water accommodation spaces is controlled in dependency on an external parameter, wherein the external parameter is selected from the group consisting of temperature, degree of humidity and time.

11. Method according to claim 10, wherein the control means are operative in dependency on temperature, in particular in or near the closing device or at a location in the surrounding area, wherein the temperature has preferably been selected from the group consisting of the air temperature, the temperature of the collected atmospheric water, in particular the water in the lower trays or in the conduits, and the temperature of the growth medium.

12. Method according to claim 10 or 11, wherein the discharge is restricted or closed at a temperature of below approximately 5 degrees C and/or wherein the discharge is opened at a temperature of above approximately 5 degrees C.

13. Method according to claim 10, 11 or 12, wherein lower trays have been placed on the roof-covering for forming the water accommodation spaces, wherein, preferably, via an individual outlet each lower tray discharges water to a first collection conduit for discharge connected thereto, which collection conduit preferably is disposed outside of the lower tray.

14. Method according to claim 11, 12 or 13, wherein the roof is at a slope in a first direction, wherein the lower trays have been placed in series that are consecutive in the first direction, which series extend in a second direction transverse to the first direction, and wherein water from the lower trays is discharged from the relatively low side of each series of lower trays extending in the second direction, wherein, preferably, the water of several first collection conduits is collected in a second collection conduit extending in the first direction, which second collection conduit runs to a discharge.

15. Method according to claims 14, wherein the discharge of water is controlled at a location in the first collection conduits, in particular using a thermostat-controlled tap.

16. System according to any one of the preceding claims or according to the preamble of claim 1, wherein the first accommodation spaces have been formed by upper trays, wherein the upper trays have first bottoms and the lower trays have second bottoms, wherein at the location of places that are regularly distributed over their surface the first and the second bottoms are kept spaced apart from each other by a support.

17. System according to claim 16, wherein the support has upright walls, which walls have been provided with passage openings for the passage of water in horizontal direction.

18. System according to claim 16 or 17, wherein the support has been built up from a structure of upright walls forming vertically continuous cells, in particular honeycomb cells.

19. System according to claim 18, wherein the cell walls and the second bottom leave horizontal fluid flow paths free.

20. System according to claim 19, wherein the cell walls have been provided with passage openings, preferably at their lower edges.

21. System according to claim 19, wherein the second bottom has been provided with recesses, wherein the recesses are part of the said fluid flow paths, wherein, preferably, between the recesses the second bottom forms support surfaces for the support.

22. System according to any one of the preceding claims or according to the preamble of claim 1, wherein the first accommodation spaces are downwardly bound by a bottom provided with passages for water, wherein in between the passages in said bottom and the lower trays water transporting bodies have been arranged, which extend to inside the passages and extend at least to near the bottom of the lower trays.

23. System according to claim 22, wherein the water transporting bodies have been made of capillary material, wherein, preferably, the material is mineral wool, in particular rock wool.

24. System according to claim 22 or 23, wherein at the location of the passages the bottom of the first accommodation space has been provided with break-out ports for forming the passages.

25. System according to claim 21 and according to claims 22, 23 or 24, wherein the water transporting bodies extend downward into the recesses of the second bottom, preferably down to against its bottom surface.

26. System according to any one of the claims 18-21 and according to any one of the claims 22-25, wherein the bodies have been arranged in one or more of the cells.

27. System according to any one of the preceding claims, wherein the roof has an edge and wherein the lower trays extend closer to the roof edge than the upper trays do, in order to leave a path free, preferably all around, wherein in case of using the support according to claim 16 ff., the support at that location bears tiles for forming a path.

28. System for vegetation on a roof, in particular a flat roof, in particular a flat roof placed at a slope, comprising a number of upper trays having first bottoms and having (first) accommodation spaces for holding a growth medium and vegetation placed in or on it, a number of lower trays placed on the roof on which lower trays the upper trays are supported, which lower trays form second or water accommodation spaces for holding a storage of atmospheric water drainage for the benefit of the growth medium and the vegetation, wherein the upper trays have a bottom provided with a number of first openings for downward migration of atmospheric water from the upper tray to the lower tray and with a number of second openings, preferably situated between the first openings, wherein a water transporting membrane has been laid on the bottom of the upper trays, wherein the lower trays have a second bottom, wherein immediately below the second openings water transporting bodies of capillary material have been arranged that each have a cross-section of a few cm2 or more and that extend vertically from the second openings to inside the water accommodation spaces.

29. System according to claim 28, wherein the water transporting bodies are made of capillary material.

30. System according to claim 29, wherein the material of the water transporting bodies is mineral wool, in particular rock wool.

31. System according to claim 28, 29 or 30, wherein between the bottom of the upper trays and the bottom of the lower trays a support supporting the upper trays has been placed, which support has vertically continuous cells, in particular honeycomb cells, wherein the water transporting bodies of capillary material extend through the support from the second openings into the water accommodation spaces.

32. System according to claim 31, wherein the water transporting bodies have a cross-section exceeding the cross-section of the cells and as a result extend in more than two adjacent cells.

33. System according to claim 31 or 32, wherein the water transporting bodies have a height exceeding the height of the support.

34. System according to any one of the claims 28-33, wherein the second openings have been provided with support means for support on the upper side of the water transporting bodies.

35. System according to any one of the claims 28-34, wherein the water transporting bodies make water transporting contact with the membrane.

36. System according to any one of the claims 31-35, wherein the support extends over at least almost the entire surface of the bottom of the lower tray in question.

37. System according to claim 36, wherein the lower tray has a circumferential wall having an upper edge, wherein the upper edges of the cells of the support are at a level that at the most equals the level of the upper edge of the lower tray circumferential wall.

38. System according to any one of the claims 31-37, wherein the cell walls and the second bottom leave horizontal fluid flow paths free.

39. Assembly of vegetation trays and pillars, wherein the vegetation trays have a bottom having first elevations or recesses and the pillars with their lower end can be fitted on the top side of the elevations or in the top side of the recesses of the one vegetation tray, and with their upper end can be fitted in the bottom side of the elevations or on the bottom side of the recesses of another vegetation tray situated above it.

40. Assembly according to claim 39, wherein the pillars have sidewalls enabling passage of growth medium/substrate for vegetation.
